# FASCICULE DE BREVET EUROPEEN

(11) **EP 3 395 077 B1**
(45) Date de publication et mention de la délivrance du brevet: **19.02.2020**
(21) Numéro de dépôt: 16826390.3
(22) Date de dépôt: 16.12.2016
(51) Int. Cl.: H04N 21/254, H04N 21/41, H04N 21/454, H04N 21/4545, H04N 21/4788

(54) **PROCÉDÉ DE PARTAGE D'UNE IMAGE NUMÉRIQUE ENTRE UN PREMIER TERMINAL D'UTILISATEUR ET AU MOINS UN SECOND TERMINAL D'UTILISATEUR SUR UN RÉSEAU DE COMMUNICATION**
VERFAHREN ZUR GEMEINSAMEN NUTZUNG EINES DIGITALEN BILDES ZWISCHEN EINEM ERSTEN BENUTZERENDGERÄT UND MINDESTENS EINEM ZWEITEN BENUTZERENDGERÄT ÜBER EIN KOMMUNIKATIONSNETZWERK
METHOD FOR SHARING A DIGITAL IMAGE BETWEEN A FIRST USER TERMINAL AND AT LEAST ONE SECOND USER TERMINAL OVER A COMMUNICATIONS NETWORK

(30) Priorité: 23.12.2015 FR 1563285
(43) Date de publication de la demande: 31.10.2018
(73) Titulaire: Orange, 75015 Paris (FR)
(72) Inventeur: FLOURY, Cédric, 22700 Perros Guirec (FR); MERCIER, Violaine, 22560 Pleumeur Bodou (FR)
(86) Numéro de dépôt international: PCT/FR2016/053501
(87) Numéro de publication internationale: WO 2017/109353

(56) Documents cités:
- WO-A1-2014/173588
- US-A1- 2009 010 570
- US-A1- 2012 250 951
- US-A1- 2013 254 843

## Description

### Domaine technique

L'invention concerne de manière générale les terminaux de télécommunication, et concerne en particulier de partage d'une image numérique entre un premier terminal d'utilisateur et au moins un second terminal d'utilisateur sur un réseau de communication, L'invention vise en particulier les terminaux de télécommunication de type *smartphone* dans le domaine de la téléphonie mobile.

### Etat de la technique

Actuellement dans le domaine de la téléphonie mobile, les terminaux de communication de type *smartphone,* ou "téléphone intelligent", sont très répandus, tel que l'iPhone™ commercialisé par la société Apple. Un *smartphone* peut être défini comme étant un téléphone mobile évolué disposant des fonctions d'un assistant numérique personnel, d'un appareil photo numérique et d'un ordinateur portable. La saisie des données se fait le plus souvent par le biais d'un écran tactile ou, plus rarement d'un clavier ou d'un stylet. Selon le principe d'un ordinateur, il peut exécuter divers logiciels/applications grâce à un système d'exploitation spécialement conçu pour mobiles, et donc en particulier fournir des fonctionnalités en plus de celles des téléphones mobiles classiques comme : l'agenda, la télévision, le calendrier, la navigation sur le Web, la consultation et l'envoi de courrier électronique, la géolocalisation, le dictaphone/magnétophone, la calculatrice, la boussole, l'accéléromètre, le gyroscope, la messagerie vocale visuelle, la cartographie numérique etc.

En dehors des fonctions de communication classiques telles que la téléphonie ou la messagerie (emails, messages), la fonction "appareil photo" est l'une des fonctionnalités actuellement les plus utilisées dans les smartphones. En effet, un terminal de type smartphone dispose d'un appareil de prise de vues, appelé aussi caméra, conçu pour capturer et enregistrer des images photographiques (mode appareil photo) ou des séquences vidéos (mode caméra). Généralement, les smartphones actuels sont équipés de deux caméras, l'une est dite "frontale" ou "avant" car son objectif est orienté du même côté que l'écran, l'autre plus classique est dite "arrière" son objectif étant orienté du côté opposé à l'écran. La caméra frontale permet typiquement à un utilisateur du terminal de prendre une photo de lui-même, appelée communément *"selfie"* en anglais, c'est-à-dire un autoportrait photographique. La caméra arrière est utilisée pour prendre des photos ou des vidéos de la même façon qu'un appareil photographique numérique classique.

De même, une tablette dite tactile, électronique ou numérique, telle l'iPAd™ commercialisé par la société Apple, est un ordinateur portable ultraplat qui se présente sous la forme d'un écran tactile sans clavier et qui offre à peu près les mêmes fonctionnalités qu'un ordinateur personnel. Une tablette permet d'accéder à des contenus multimédias tels que la télévision, la navigation sur le web, la consultation et l'envoi de courrier électronique, l'agenda, le calendrier et la bureautique simple. Il est possible d'installer des applications supplémentaires depuis une boutique d'applications en ligne. En quelque sorte, une tablette tactile est un intermédiaire entre l'ordinateur portable et le smartphone.

Dans ce contexte, les utilisateurs de terminaux de type smartphone, tablette ou de manière générale d'ordinateurs portables, échangent de plus en plus souvent des photos personnelles avec d'autres utilisateurs sur un réseau de communication tel qu'un réseau mobile ou l'Internet. Typiquement, à cette fin, l'utilisateur d'un terminal accède à une galerie ou album de photos numériques du terminal, sélectionne une photo et l'envoie à un ou plusieurs contacts qu'il choisit. Généralement, pour le partage de photos, l'utilisateur choisit de joindre la photo sélectionnée à un message court de type MMS (*Multimedia Messaging Service)* ou bien à un courrier électronique (email), ou utilise une application spécifique de messagerie instantanée telle que WhatsApp™ pour smartphone, ou une application de partage de photos et de vidéos telle que Snapchat™ conçue également pour smartphone.

La diffusion ou partage de photos ou d'images numériques personnelles, de manière générale, présente un risque d'un point de vue de l'usage qui peut en être fait par le destinataire de la photo partagée. En effet, il n'est pas rare qu'une photo ou vidéo personnelle transmise à un tiers soit ensuite diffusée sur des réseaux sociaux ou autre médias de communication aux fins de nuire à la personne à l'origine de la photo/vidéo.

Pour répondre au risque relatif au partage de photos, exposé ci-dessus, il existe des applications qui proposent des mécanismes pour sécuriser le partage d'images numériques. Ainsi l'application Snapchat™ propose un mécanisme de photos éphémères, c'est-à-dire une photographie à durée de vie limitée, qui disparait au bout de quelques secondes lorsqu'elle est affichée sur le terminal de l'utilisateur destinataire.

Cependant, ce mécanisme de photographie à durée de vie limitée, bien qu'améliorant la sécurité dans le partage de photographies, ne supprime pas le risque d'un usage détourné ou frauduleux d'une image reçue. En effet, pendant les quelques secondes durant lesquelles une image est affichée sur l'écran d'un terminal destinataire, l'utilisateur du terminal peut effectuer une capture d'écran et donc enregistrer l'image dans son terminal ou bien prendre une photographie, avec un autre dispositif photographique, de l'écran de son terminal sur lequel l'image partagée est affichée.

Le document US2013/254843A1 décrit un procédé pour contrôler l'accès à un support visuel dans un réseau social comprenant des unités d'utilisateurs connectées à un serveur de site de réseau social, associé à une base de données, et à un serveur de support visuel distordu stockant des supports visuels postés par les utilisateurs du réseau social.

Le document WO2014/173588A1 décrit un procédé de traitement d'une image numérique permettant de crypter une région de l'image et stocker l'image cryptée dans un serveur, puis récupérer l'image cryptée dans un dispositif multimédia et décrypter l'image cryptée.

Le document US2012/250951A1 décrit un procédé de partage de photos en ligne selon lequel le visage d'individus identifiés sur des photos stockées dans un serveur, peut être flouté puis dé-floutés sur autorisation.

Le document US2009/010570A1 décrit un dispositif pour appliquer une altération réversible à une image originale obtenue par prise photographique, puis enregistrer l'image altérée avec une information permettant la restauration de l'image altérée afin d'obtenir à nouveau l'image originale.

L'invention vise notamment à améliorer la situation exposée ci-dessus.

### Exposé de l'invention

Ainsi, selon un premier aspect, l'invention concerne un procédé de partage d'une image numérique entre un premier terminal d'utilisateur et au moins un second terminal d'utilisateur sur un réseau de communication. Conformément à l'invention ce procédé comporte des étapes de :
- affichage dans le second terminal d'une seconde image dite "image dégradée" obtenue à partir de l'image numérique dite "première image" par un traitement numérique de la première image visant à dissimuler visuellement son contenu ;
- suite à la détection d'une interaction d'un utilisateur avec l'écran du second terminal :
   - détermination d'une zone de l'image dégradée, dite "zone d'interaction", en fonction de la localisation de l'interaction sur l'écran ;
   - obtention d'une partie de la première image correspondant à la zone déterminée de l'image dégradée ;
   - affichage sur l'écran du second terminal de la partie de la première image à la place de la surface correspondante de l'image dégradée, pendant la durée de l'interaction de l'utilisateur avec l'écran.

Grâce à ce procédé, le contenu d'une image numérique originale ("première image"), telle qu'une photographie, affichée sur l'écran du terminal destinataire (second terminal) sera dissimulé dans l'image transmise (image dégradée), par exemple par l'utilisation d'une technique de floutage ; et seule la partie de l'image correspondant à la zone de l'écran avec laquelle l'utilisateur interagit apparaitra en clair. Par conséquent, même en déclenchant une capture d'écran l'utilisateur ne pourra pas obtenir une copie de l'image complète.

Selon une caractéristique de réalisation de l'invention, le procédé comprend des étapes de :
- partitionnement selon un motif déterminé de la première image en un ensemble de parties d'image, ce motif définissant le mode de partitionnement de la première image et indiquant l'emplacement de chacune des parties dans la première image ;
- enregistrement de l'ensemble des parties de la première image avec le motif de partitionnement.

Un tel motif (*template* en anglais) de partitionnement pourra être par exemple la division ou segmentation de la première image dans le sens de la longueur en un nombre N de parties de surface égale. Cependant, dans d'autres modes de réalisations, la forme géométrique et le nombre de de parties de la première image peuvent être déterminés de manière aléatoire.

Ainsi, dans le cas d'une interaction tactile entre l'utilisateur et l'écran du second terminal, tant que le doigt de l'utilisateur restera posé sur une zone de l'écran du terminal, donc de l'image dégradée, cette zone se trouvant majoritairement dans l'une des parties prédéfinies de l'image originale (première image), seule la surface de l'image dégradée correspondant à cette partie de la première image, sera affichée en clair dans le terminal. Le reste de l'image dégradée est inchangé c'est-à-dire dissimulé.

Selon un premier mode de réalisation de l'invention, le procédé précité comprend une étape initiale de transmission par le premier terminal d'une requête de transfert d'image à destination d'un serveur de traitement d'images sur le réseau, cette requête de transfert d'image comprenant la première image et un identifiant du second terminal.

Dans ce premier mode de réalisation, le procédé selon l'invention comprend, avant l'étape d'affichage dans le second terminal de l'image dégradée, une étape de réception dans le second terminal en provenance du serveur de traitement d'images, de l'image dégradée ainsi que du motif de partitionnement de la première image.

Ainsi, le traitement d'image correspondant à l'obtention de l'image dégradée selon un motif de partitionnement défini, est effectué dans un serveur sur le réseau, allégeant ainsi les traitements effectués dans le premier ou dans le second terminal.

Selon une caractéristique de mise en œuvre de l'invention, le procédé précité comprend des étapes de :
- suite à la détection d'une interaction de l'utilisateur avec l'écran du second terminal, détermination de la localisation de l'interaction sur l'écran et détermination en conséquence de la zone d'interaction de l'image dégradée ;
- comparaison, en utilisant le motif de partitionnement, de la zone d'interaction avec l'emplacement de chacune des parties dans la première image, et identification d'une des parties de la première image correspondant à cette zone d'interaction.

Selon une première variante du premier mode de réalisation exposé plus haut, le procédé comprend, suite à l'étape de comparaison précitée, des étapes de :
- envoi par le second terminal d'une requête d'obtention de la partie identifiée de la première image, à destination du serveur de traitement d'images ;
- suite à la réception par le second terminal de la partie identifiée de la première image, remplacement de la surface correspondante de l'image dégradée par la partie reçue de la première image.

Selon cette première variante, c'est le serveur de traitement d'image qui reçoit une requête contenant un identifiant (par exemple un numéro) de la partie de la première image correspondant à la zone d'interaction dans l'image dégradée et qui transmet en retour au second terminal cette partie à afficher en clair, par exemple par superposition avec l'image dégradée. Cette variante de réalisation permet par conséquent d'alléger côté terminal la charge de traitement liée à l'exécution d'une application de partage d'images selon l'invention.

Selon une seconde variante du premier mode de réalisation de l'invention, le procédé comprend en outre, avant l'étape d'affichage dans le second terminal de l'image dégradée :
- réception dans le second terminal, en provenance du serveur de traitement d'images, de l'ensemble des parties de la première image ; et
- l'enregistrement dans une mémoire du second terminal de l'ensemble des parties de la première image ;
le second terminal mettant en œuvre l'étape d'obtention de la partie de la première image correspondant à la zone d'interaction déterminée de l'image dégradée.

Ainsi, selon cette seconde variante, après réception de l'image dégradée associée au motif de partitionnement de l'image originale (première image), les opérations de détermination d'une zone d'interaction de l'utilisateur avec l'écran du second terminal, en fonction de la localisation de l'interaction sur l'écran, et d'obtention d'une partie de la première image correspondant à la zone déterminée de l'image dégradée, sont effectuées directement dans le second terminal par l'application de partage d'images. Cette variante de réalisation, bien que légèrement moins fiable en termes de sécurité, puisque toutes les parties en clair de l'image d'origine sont stockées dans le terminal, présente l'avantage de ne pas nécessiter d'échanges entre le second terminal et le serveur pour obtenir successivement toutes les parties en clair (non codées par floutage par exemple) au fur et à mesure que l'utilisateur déplace son doigt sur l'écran du terminal.

De plus, la seconde variante est notamment plus efficace lorsque les performances réseau sont médiocres, puisque les échanges, selon la première variante, entre le second terminal et le serveur de traitement d'images afin d'obtenir successivement les parties de l'image d'origine en clair peuvent impliquer des temps de réponse importants, et donc dégrader la qualité du service.

Selon un second mode de réalisation de l'invention, le procédé de partage d'images comprend les étapes suivantes, effectuées dans le premier terminal :
- partitionnement selon un motif déterminé de la première image en un ensemble de parties d'image, le motif définissant le mode de partitionnement de la première image et indiquant l'emplacement de chacune des parties dans la première image ;
- enregistrement de l'ensemble des parties avec le motif de partitionnement ;
- transmission au second terminal de l'image dégradée, du motif de partitionnement de la première image, et de l'ensemble des parties de la première image.

Selon ce second mode de réalisation, les échanges d'images et des éléments additionnels (motif de partitionnement, parties de l'image d'origine résultant du partitionnement) sont effectués directement entre le premier et le second terminal, sans nécessiter par conséquent la mise en œuvre d'un serveur intermédiaire.

En particulier, dans ce second mode de réalisation, selon une implémentation particulière du procédé, le second terminal met en œuvre les étapes suivantes :
- détermination de la localisation d'une interaction sur l'écran et détermination en conséquence de la zone d'interaction de l'image dégradée ;
- comparaison, en utilisant le motif de partitionnement, de la zone d'interaction avec l'emplacement de chacune des parties dans la première image, et identification d'une des parties de la première image correspondant à la zone d'interaction ;
- remplacement de la surface correspondante de l'image dégradée par la partie identifiée de la première image.

Ce second mode de réalisation implique l'installation d'une application de partage d'images selon l'invention, dans chacun des terminaux impliqués dans le partage d'images, plus complexe en termes de fonctionnalités (codage de l'image originale en image dégradée, et processus de remplacement d'une partie d'image dégradée par la partie correspondante de l'image d'origine), mais permet avantageusement de s'affranchir de l'utilisation d'un serveur de traitement sur le réseau. Ce second mode de réalisation est donc plus économique en termes de mise en œuvre, et son utilisation est mieux adaptée dans le cadre d'un réseau aux performances modestes.

Selon une application particulière du procédé de partage d'images selon l'invention, l'écran du second terminal est un écran tactile. Dans ce cas, l'utilisateur interagit digitalement (avec un doigt) avec l'écran, et l'affichage sur l'écran de la partie (identifiée) de la première image à la place de la surface correspondante de l'image dégradée, n'a lieu que pendant la durée de l'interaction digitale de l'utilisateur sur la zone d'interaction de l'image dégradée.

Cette application de l'invention à un terminal équipé d'un écran tactile est particulièrement adaptée à un terminal de type smartphone ou tablette tactile.

Selon une autre application particulière du procédé de partage d'images selon l'invention, l'écran du second terminal est équipé d'un dispositif de pointage, l'utilisateur interagissant avec l'écran au moyen du dispositif de pointage. Dans ce cas, l'affichage sur l'écran de la partie (identifiée) de la première image à la place de la surface correspondante de l'image dégradée, n'a lieu que pendant le maintien du pointage par l'utilisateur, via ledit dispositif de pointage, sur la zone d'interaction de l'image dégradée.

Cette application de l'invention est particulièrement adaptée à un terminal de type ordinateur personnel équipé d'un écran classique et d'un dispositif de pointage, tel qu'une souris.

Corrélativement, selon un second aspect, l'invention a pour objet un terminal de communication comprenant des moyens logiciels et/ou matériels configurés pour :
- recevoir une image dite "image dégradée" obtenue à partir d'une image numérique dite "première image" par un traitement numérique de la première image visant à dissimuler visuellement son contenu ;
- afficher cette image dégradée sur un écran du terminal ;
- suite à la détection d'une interaction d'un utilisateur avec l'écran du terminal :
- déterminer une zone de l'image dégradée, dite "zone d'interaction", en fonction de la localisation de l'interaction sur l'écran ;
- obtenir une partie de la première image correspondant à la zone déterminée de l'image dégradée ;
- afficher sur l'écran du terminal la partie de la première image à la place de la surface correspondante de l'image dégradée, pendant la durée de l'interaction de l'utilisateur avec l'écran.

Selon un mode de réalisation de l'invention, un tel terminal comprend des moyens configurés pour recevoir, en provenance d'un serveur de traitement d'images, l'image dégradée ainsi qu'un motif de partitionnement de la première image, le motif définissant le mode de partitionnement de l'image et indiquant l'emplacement de chacune des parties dans la première image.

Selon une caractéristique particulière d'un tel terminal, il comprend des moyens configurés pour :
- suite à la détection d'une interaction de l'utilisateur avec l'écran, déterminer la localisation de l'interaction sur l'écran et déterminer en conséquence la zone d'interaction de l'image dégradée ;
- comparer, en utilisant le motif de partitionnement, la zone d'interaction avec l'emplacement de chacune des parties dans la première image, et identifier une des parties de la première image correspondant à la zone d'interaction.

Selon un mode de réalisation particulier, un terminal de communication selon l'invention comprend des moyens configurés pour :
- envoyer une requête d'obtention de la partie identifiée de la première image, à destination du serveur de traitement d'images ;
- suite à la réception par le terminal de la partie identifiée de la première image, remplacer la zone d'interaction de l'image dégradée par la partie reçue de la première image.

Corrélativement, selon un troisième aspect, l'invention concerne un serveur de traitement d'images, comprenant des moyens logiciels et/ou matériels configurés pour :
- recevoir une première image d'un premier terminal de communication via un réseau de communication ;
- obtenir une second image dite "image dégradée" à de partir la première image par un traitement numérique de la première image visant à dissimuler visuellement son contenu ;
- partitionner selon un motif déterminé la première image en un ensemble de parties d'image, le motif définissant le mode de partitionnement de la première image et indiquant l'emplacement de chacune des parties dans la première image ;
- enregistrer l'ensemble des parties avec le motif de partitionnement ;
- transmettre à un second terminal de communication au moins l'image dégradée et le motif de partitionnement.

En pratique, les moyens constitutifs de l'invention - qui permettent la mise en œuvre des étapes du procédé de partage d'images brièvement explosé plus haut, dans un terminal de communication selon l'invention et dans un serveur de traitement d'images selon l'invention -, sont essentiellement implémentés sous forme logicielle c'est-à-dire un ou plusieurs programmes informatiques stockés dans une ou plusieurs mémoires, de type RAM (*Random Access Memory*)*,* ROM (*Read Only Memory*) ou de type magnétique (disque dur par exemple), et exécutés par un processeur incorporé dans le terminal ou le serveur considérés, selon le cas.

En particulier, un terminal selon l'invention, par exemple de type smartphone ou tablette électronique, pourra télécharger une application logicielle spécifique de partage d'images numériques, selon l'invention, via un magasin d'applications en ligne.

Par conséquent, selon un dernier aspect, la présente invention vise aussi un programme d'ordinateur stocké sur un support d'informations et mis en œuvre dans un terminal de communication ou dans un serveur sur un réseau de communication, ce programme comprenant des instructions dont l'exécution par un processeur du terminal ou du serveur, provoque l'exécution de tout ou partie des étapes d'un procédé de partage d'images numériques selon l'invention.

Un tel programme d'ordinateur selon l'invention peut utiliser divers langages de programmation, et comprendre des programmes sous forme de code source, code objet, ou de code intermédiaire entre code source et code objet, tel que dans une forme partiellement compilée, ou dans n'importe quelle autre forme souhaitable.

Enfin, l'invention vise aussi un support d'enregistrement d'informations lisible par un ordinateur, et comportant des instructions de programme d'ordinateur. Un tel support d'enregistrement peut être constitué par n'importe quelle entité ou dispositif capable de stocker un tel programme. Par exemple, le support peut comporter un moyen de stockage, tel qu'une ROM, par exemple un CD ROM ou une ROM de circuit microélectronique, ou encore un moyen d'enregistrement amovible tel qu'une clé USB ou un moyen d'enregistrement magnétique, tel qu'un disque dur. D'autre part, un programme ou module logiciel selon l'invention peut être en particulier téléchargé sur un réseau de type Internet.

Les avantages procurés par un terminal de communication, un serveur ou un programme d'ordinateur, selon l'invention, tels que brièvement définis ci-dessus, sont identiques ou contribuent à ceux mentionnés plus haut en relation avec le procédé de partage d'images numériques, selon l'invention, et ne seront par conséquent pas rappelés ici.

### Brève description des figures

D'autres caractéristiques et avantages de la présente invention ressortiront de la description détaillée qui suit, laquelle fait référence aux dessins annexés dans lesquels :
- la figure 1 illustre un environnement réseau dans lequel la présente invention est mise en œuvre, selon un mode de réalisation ;
- la figure 2 représente sous forme d'organigramme les principales étapes d'un procédé de partage d'une image numérique entre un premier terminal d'utilisateur et au moins un second terminal d'utilisateur sur un réseau de communication, selon un mode de réalisation de l'invention ;
- la figure 3 illustre l'application d'un motif de partitionnement particulier appliqué à une photographie numérique floutée affichée sur un écran d'un terminal, avec une partie de la photographie affichée en clair suite à une interaction d'un utilisateur avec l'écran ; et
- les figures 4a et 4b représentent le terminal de la figure 3 sur l'écran duquel deux parties distinctes de l'image floutée sont affichées en clair suite à deux interactions successives de l'utilisateur avec l'écran du terminal.

### Description détaillée de l'invention

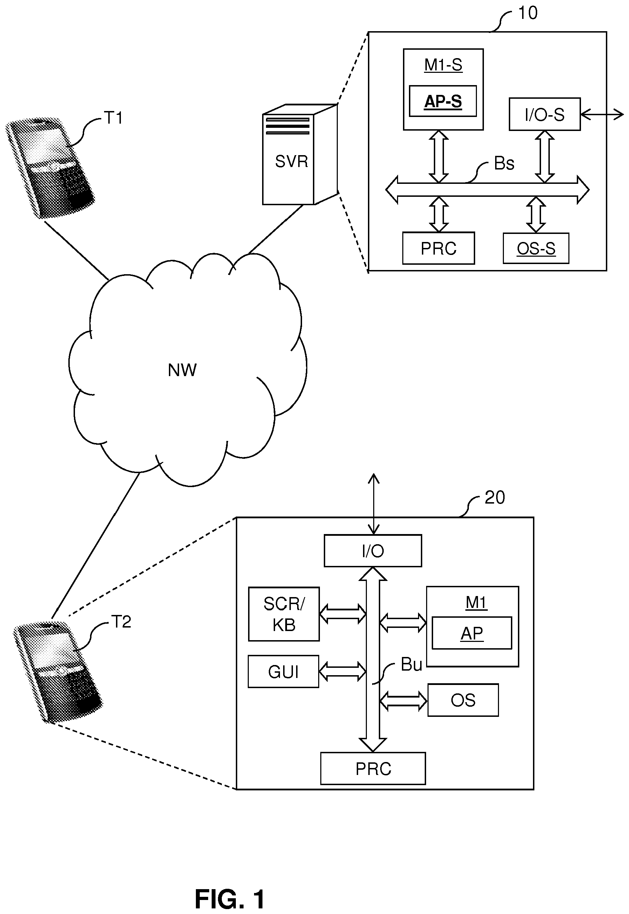

La **figure 1** représente un environnement réseau dans lequel la présente invention est mise en œuvre, selon un mode de réalisation. L'environnement réseau représenté comprend un réseau de communication NW, un premier terminal T1 de type smartphone, un second terminal T2 également de type smartphone dans cet exemple, et un serveur de traitement d'images SVR.

Le réseau NW est ici, selon l'exemple de réalisation choisi et illustré, un réseau mobile dit de 3^{ème} génération - par exemple conforme à la norme UMTS (*Universal Mobile Telecommunications System*) -, ou à un réseau mobile dit de 4^{ème} génération - par exemple conforme à la norme LTE (*Long Term Evolution*)*.* Ce réseau NW permet l'interconnexion avec un réseau IP (Internet Protocol), non représenté sur la figure, et auquel est connecté le serveur SVR dans le mode de réalisation décrit.

Les terminaux T1 et T2 sont constitués d'éléments agencés selon une architecture matérielle (20) d'ordinateur intégrant une mémoire et disposent d'une application de partage d'images selon l'invention préalablement installée dans leur mémoire.

Cette architecture, notée 20, est décrite ici en regard du terminal T2. Cette architecture comprend notamment un processeur (PRC) et des composants mémoire de type ROM et RAM communiquant par l'intermédiaire d'un ensemble d'un ou plusieurs bus de données (Bu) ;
- un module I/O d'interface de communication réseau, capable d'établir des sessions de communication selon un protocole de communication tel qu'un protocole de type HTTP (*HyperText Transfer Protocol*) ou HTTPS (*HyperText Transfer Protocol Secure*)*,* sur le réseau NW pour communiquer avec le serveur SVR ou avec un autre terminal équipé d'une application de partage selon l'invention ;
- un module système d'exploitation, OS, par exemple le système d'exploitation Android™ de la société Google, gérant l'interaction entre les différents modules et le processeur (PRC) du terminal T1 ou T2 ;
- un module d'affichage SCR/KB associé à un clavier (tactile ou mécanique) et un écran d'affichage couplé avec un module d'interface graphique GUI (*Graphical User Interface*) pour présenter graphiquement à l'utilisateur du terminal des données relatives à une ensemble d'applications, notamment de communication, et de partage d'images, installées dans le terminal ;
- un module mémoire M1 comportant notamment les modules logiciels associés à un ensemble d'applications AP installées dans le terminal dont l'application de partage d'images selon l'invention, laquelle application comprend les composants logiciels chargés respectivement de mettre en œuvre le procédé de partage d'images selon l'invention; les composants précités étant commandés par le système d'exploitation OS.

Dans cet exemple de réalisation le terminal T1 est le terminal émetteur d'une image numérique à partager avec le terminal T2.

D'un point de vue fonctionnel, chacun des terminaux T1, T2 inclut notamment les modules fonctionnels détaillés ci-après et regroupés dans une application AP installée en mémoire (M1) de chaque terminal.

Le terminal T1 comporte notamment (premier mode de réalisation exposé plus haut) :
- Un module de sélection, dans une galerie d'images, d'une image à partager avec au moins un second terminal sur le réseau.
- Un module de transmission d'une requête de transfert d'image à destination du serveur de traitement d'images SVR sur le réseau.

Selon le second mode de réalisation exposé plus haut, le terminal T1 peut également comprendre :
- Un module de partitionnement selon un motif (*template*) déterminé de la première image en un ensemble de parties d'image, le motif définissant le mode de partitionnement de la première image et indiquant l'emplacement de chacune des parties dans la première image.
- Un module d'enregistrement de l'ensemble des parties avec le motif de partitionnement.
- Un module de transmission à un second terminal (T2) de l'image dégradée, du motif de partitionnement de la première image, et de l'ensemble des parties de la première image.

Selon ce second mode de réalisation, les échanges d'images et des éléments additionnels (motif de partitionnement, parties de l'image d'origine résultant du partitionnement) sont effectués directement entre le terminal T1 et le terminal T2, sans nécessiter par conséquent la mise en œuvre d'un serveur intermédiaire SVR.

Le terminal T2 comporte notamment les modules fonctionnels suivants :
- Un module de réception en provenance du serveur de traitement d'images SVR (premier mode de réalisation) ou directement du terminal T1 (second mode de réalisation), d'une image dégradée ainsi que du motif de partitionnement de l'image originale (première image).
- Un module d'affichage de l'image dégradée sur l'écran du terminal.
- Un module de détection d'une interaction d'un utilisateur avec l'écran du terminal.
- Un module de détermination d'une zone de l'image dégradée, dite "zone d'interaction", en fonction de la localisation d'une interaction d'un utilisateur avec l'écran.
- Un module d'obtention d'une partie de la première image correspondant à la zone déterminée de l'image dégradée ; le module d'obtention d'une partie d'image est configuré notamment pour déterminer la localisation de l'interaction sur l'écran et déterminer en conséquence la zone d'interaction de l'image dégradée, et ensuite comparer, en utilisant le motif de partitionnement, la zone d'interaction avec l'emplacement de chacune des parties dans la première image, et identifier ainsi l'une des parties de la première image correspondant à cette zone d'interaction.
- Un module d'affichage sur l'écran du terminal de la partie identifiée de la première image à la place de la surface correspondante de l'image dégradée, pendant la durée de l'interaction de l'utilisateur avec l'écran.

Selon le premier mode de réalisation exposé plus haut, dans sa première variante, le terminal T2 comprend en outre :
- Un module d'envoi d'une requête d'obtention de la partie identifiée de la première image, à destination du serveur de traitement d'images, et de réception de la partie identifiée de la première image.
- Un module de remplacement de la surface correspondante de l'image dégradée par la partie reçue de la première image.

Selon la seconde variante du premier mode de réalisation, le module d'envoi/réception précité du terminal T2 est configuré en outre pour recevoir, en provenance du serveur de traitement d'images, l'ensemble des parties de la première image ; et enregistrer dans une mémoire (M1) du second terminal l'ensemble des parties de la première image. Dans cette seconde variante, l'obtention de la partie de la première image correspondant à la zone d'interaction déterminée de l'image dégradée, est mise en œuvre directement dans le second terminal sans faire appel au serveur (SVR).

Le serveur de traitement d'images SVR n'est exploité que dans le cadre du premier mode de réalisation exposé plus haut. Le serveur SVR est alors accessible via le réseau NW.

En pratique, le serveur SVR est constitués d'éléments agencés selon une architecture matérielle d'ordinateur 10. Cette architecture comprend notamment un processeur (PRC) et des composants mémoire de type ROM et RAM, communiquant par l'intermédiaire d'un ou plusieurs bus de données (Bs). D'un point de vue fonctionnel le serveur SVR comprend les modules suivants :
- un module I/O-S d'interface de communication réseau, chargé de communiquer avec le réseau NW pour, notamment, recevoir en provenance des terminaux d'utilisateurs T1, T2 des requêtes de transfert d'images à partager ou des requêtes d'obtention d'une partie d'image partagée (première image) suite à une interaction d'un utilisateur avec un écran de terminal ; en pratique, selon un exemple de réalisation, les requêtes précitées utilisent un protocole de communication tel que le protocole HTTP ou HTTPS.
- un module système d'exploitation, OS-S, gérant l'interaction entre les différents modules et le processeur PRC du serveur ;
- un module mémoire M1-S dans lequel sont enregistrées des instructions de programme de l'application serveur AP-S selon l'invention, dont l'exécution par le processeur (PRC) provoque la mise en œuvre des étapes du procédé de partage d'images selon l'invention, qui sont mises en œuvre dans le serveur SVR.

Le serveur SVR comporte notamment les modules fonctionnels suivants, dans le cadre du premier mode de réalisation :
- Un module de réception d'une image, via une requête de transfert d'image, en provenance d'un premier terminal (T1) via le réseau NW.
- Un module d'obtention ou de création d'une seconde image dite "image dégradée" à partir de la première image par un traitement numérique de la première image visant à dissimuler visuellement son contenu.
- Un module de partitionnement selon un motif (ou modèle de partitionnement) déterminé de la première image en un ensemble de parties d'image, ce motif définissant le mode de partitionnement de la première image et indiquant l'emplacement de chacune des parties dans la première image ;
- Un module d'enregistrement de l'ensemble des parties avec le motif de partitionnement ;
- Un module de transmission à un second terminal de communication (T2) d'au moins l'image dégradée et le motif de partitionnement.

Selon la première variante du premier mode de réalisation, exposée plus haut, le serveur est configuré pour recevoir en provenance de terminaux tels que le terminal T2 des requêtes d'obtention de parties identifiées d'une image partagée ("première image") et de transmettre en réponse à ces terminaux des messages de réponse contenant la partie d'image en clair requise.

Selon la seconde variante du premier mode de réalisation, exposée plus haut, le serveur est configuré pour transmettre à un second terminal tel que T2, non seulement l'image dégradée et le motif de partitionnement correspondant, mais aussi l'ensemble des parties de la première image. Dans cette variante, comme expliqué plus haut, c'est le second terminal qui est en charge d'obtenir une partie de l'image d'origine correspondant à une zone d'interaction déterminée de l'image dégradée, et cela en utilisant le motif de partitionnement et l'ensemble des parties de l'image d'origine enregistré préalablement dans un répertoire stocké dans une mémoire du terminal. On notera ici qu'un tel répertoire stockant l'ensemble des parties en clair de l'image d'origine dans un terminal d'utilisateur (T2), sera localisé dans un emplacement mémoire non accessible ou sécurisé afin que l'utilisateur ne puisse pas y accéder facilement, afin de limiter les risques d'utilisation nuisible ou illicite de l'image (photographie par exemple).

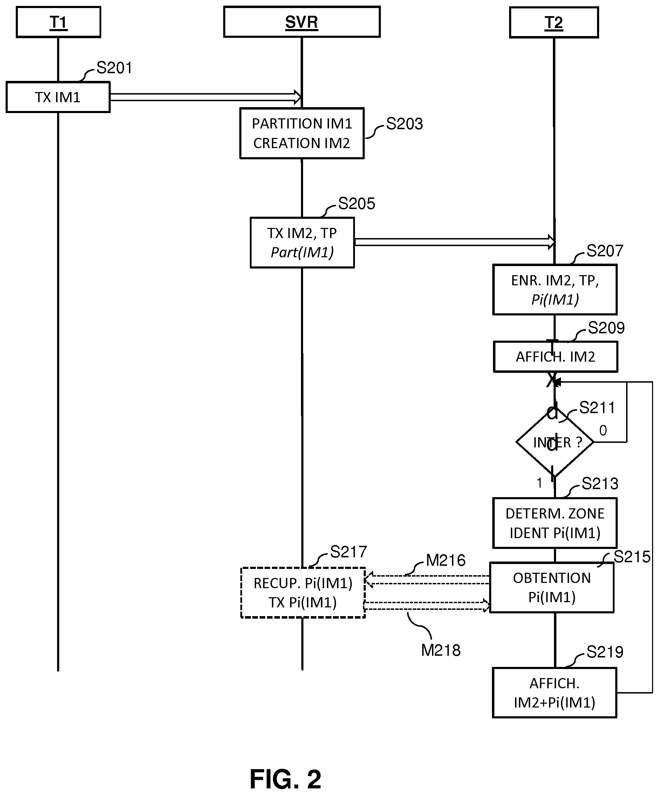

La **figure 2** représente sous forme d'organigramme les principales étapes d'un procédé de partage d'une image numérique entre un premier terminal d'utilisateur et au moins un second terminal d'utilisateur sur un réseau de communication, selon un mode de réalisation de l'invention. Il s'agit ici du premier mode de réalisation de l'invention défini plus haut.
Comme représenté sur la figure 2 et en référence à l'environnement de la figure 1, le procédé comprend initialement l'ouverture dans le terminal T1 par l'utilisateur du terminal d'une application de partage d'images selon l'invention, puis la sélection par l'utilisateur d'une image à partager, par exemple une photographie, avec un second utilisateur associé au terminal T2. Cette image d'origine désignée par "première image" (IM1) est alors transmise (TX) à l'étape S201 sous la forme d'une requête de transfert d'image à destination du serveur de traitement d'images SVR sur le réseau NW. La requête de transfert d'image comprend notamment l'image à partager ainsi qu'un identifiant d'au moins un second utilisateur avec lequel le premier utilisateur souhaite partager l'image. Cet identifiant peut être par exemple un numéro de téléphone mobile associé au second utilisateur, ou un identifiant de messagerie instantanée ou d'un réseau social permettant de joindre le second utilisateur. Une telle requête de transfert utilise de manière classique un protocole de transport tel que HTTP, mais peut utiliser tout autre protocole compatible avec le type de réseau NW utilisé pour les échanges entre les terminaux T1, T2 et le serveur SVR.

Le serveur SVR reçoit la première image (IM1), via la requête de transfert, et effectue au cours de l'étape S203 un partitionnement selon un motif déterminé de la première image en un ensemble de parties d'image. Le motif (*template*) ou modèle de partitionnement définit un mode de découpage de la première image en un ensemble de parties distinctes et permet de référencer l'emplacement de chacune de ces parties dans l'image.

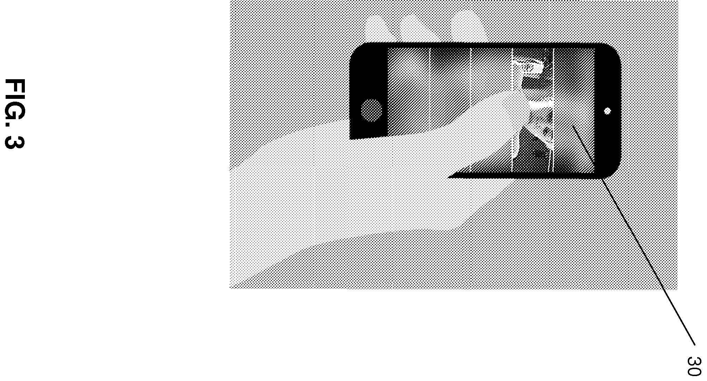

La **figure 3** illustre l'application d'un motif de partitionnement particulier appliqué à une photographie numérique floutée affichée sur un écran d'un terminal, avec une partie de la photographie affichée en clair suite à une interaction d'un utilisateur avec l'écran. Dans l'exemple représenté à la figure 3, l'image est découpée en cinq parties distinctes et de surface égale dans le sens de la hauteur de l'image. Le motif de partitionnement est donc ici constitué de cinq rectangles (30) jointifs superposés et dont la surface totale est égale celle de l'image d'origine. Si l'on référence ces "rectangles" constituant un ensemble de parties de l'image d'origine, par les numéros 1 à 5 du haut vers le bas de l'image, on voit sur la figure que la partie 2 de l'image est affichée en clair sur l'écran suite à une interaction tactile de l'utilisateur dans une zone de l'écran située majoritairement dans la partie 2 de l'image d'origine.

Le partitionnement ou découpage de l'image d'origine peut être effectué selon d'autres motifs. Ainsi, on pourra utiliser des motifs plus évolués géométriquement, par exemple des parties de l'image ayant une forme circulaire ou des parties de l'image ayant chacune une forme distincte à la manière d'un puzzle. On peut également prévoir un mode de génération aléatoire de la forme des parties de l'image d'origine.

De retour à la **figure 2****,** toujours à l'étape S203, une fois le partitionnement de l'image d'origine (IM1) effectué, l'ensemble des parties de la première image (IM1) obtenu et le motif de partitionnement utilisé, sont enregistrés dans le serveur. Ensuite, il est procédé à la création de la second image (IM2) c'est-à-dire l'image dite "dégradée", par un traitement numérique de la première image visant à dissimuler visuellement son contenu.

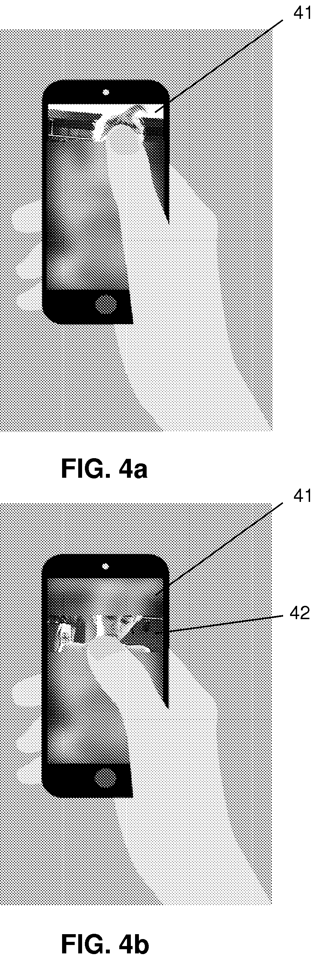

Dans l'exemple décrit et illustré par les figures 3 et 4a-4b, le traitement numérique visant à dissimuler le contenu de l'image d'origine est un traitement de floutage. Cependant, on peut utiliser d'autres techniques visant à dissimuler le contenu de l'image d'origine. Par exemple on pourra créer une image "noire" sans contenu et faire apparaître le contenu de chaque partie définie pour l'image d'origine en fonction de l'interaction de l'utilisateur sur l'écran du terminal récepteur de l'image (T2).

A l'étape S205 qui suit, l'image dégradée (IM2, seconde image) ainsi qu'une information (TP) descriptive du motif de partitionnement (*template*) sont transmises (TX) via le réseau NW à destination du second terminal (T2).

Comme expliqué plus haut, si la seconde variante du premier mode de réalisation est mise en œuvre alors l'ensemble des parties de l'image *Part(IM1)* est également transmis au terminal T2.

A l'étape S207, le terminal T2 reçoit et enregistre l'image dégradée (IM2) ainsi que le motif de partitionnement (TP) associé, et reçoit et enregistre, le cas échéant, l'ensemble des parties de l'image *Part(IM1),* si le premier mode de réalisation est mis en œuvre dans sa seconde variante.

A l'étape S209, l'image dégradée (IM2) est affichée sur l'écran du terminal T2, et suite à son affichage un processus de détection d'interaction de l'utilisateur avec l'écran du terminal T2 est exécuté, à l'étape de test S211. En pratique, dans l'exemple de réalisation décrit ici, l'écran du second terminal est un écran tactile et l'utilisateur interagit par conséquent avec l'écran en le touchant.

Tant qu'aucune interaction de l'utilisateur avec l'écran n'est détectée (S211, 0), le processus reste en attente de détection. Lorsqu'une interaction de l'utilisateur est détectée (S211, 1), par exemple si l'utilisateur touche l'écran, alors on passe à l'étape S213 au cours de laquelle une zone de l'image dégradée, dite "zone d'interaction", est déterminée en fonction de la localisation de cette interaction sur l'écran du terminal (T2).

Plus précisément à l'étape S213, dans le cas d'un écran tactile, suite à la détection d'une interaction tactile de l'utilisateur avec l'écran, la localisation de l'interaction sur l'écran est déterminée par exemple par un ou plusieurs couples de coordonnées définissant un point ou une surface sur l'écran et constituant alors une zone d'interaction détectée dans l'image dégradée.

Il est ensuite procédé à la comparaison, en utilisant le motif de partitionnement (TP) de l'image originale (IM1), de la zone d'interaction détectée avec la localisation de chacune des parties (Part(IM1)) dans l'image d'origine (IM1). Suite à cette comparaison, une partie de la l'image d'origine est identifiée par sa référence (numéro par ex.) dans le modèle de partitionnement (TP). On notera ici, que dans le cas où la zone d'interaction est située "à cheval" sur deux parties distinctes de la première image, on pourra alors sélectionner la partie de la première image dont la surface d'intersection avec la zone d'interaction est la plus grande.

Une fois, la partie Pi(IM1) identifiée de l'image d'origine, on passe à l'étape S215 au cours de laquelle il est procédé dans le terminal T2 à l'obtention de la partie identifiée de l'image d'origine (IM1).

Si la première variante du premier mode de réalisation est mise en œuvre, alors l'étape d'obtention S215 précitée est réalisée par l'envoi d'une requête M216 par le second terminal d'une requête d'obtention de la partie identifiée (Pi(M1)) de la première image, à destination du serveur de traitement d'images. A l'étape S217, le serveur reçoit le message de requête M216 de la partie identifiée de l'image d'origine, récupère la partie demandée, et la transmet (TX) via un message de réponse M218 au terminal T2.

Dans le cas où la seconde variante du premier mode de réalisation est mise en œuvre, le terminal T2 dispose en mémoire de l'ensemble des parties de l'image d'origine, et par conséquent l'obtention d'une partie de l'image d'origine correspondant à une interaction utilisateur-écran détectée est exécutée entièrement dans le terminal T2, sans faire appel au serveur SVR.

Suite à l'obtention par le second terminal de la partie identifiée de l'image d'origine, il est procédé, à l'étape S219, au remplacement de la surface correspondante de l'image dégradée par la partie identifiée de l'image d'origine, puis à l'affichage de l'image résultante "IM2+Pi(IM1)" à l'écran. Dans le cadre d'une interaction tactile de l'utilisateur avec l'écran, la partie de l'image d'origine affichée en clair dans l'image dégradée n'est affichée que tant que l'utilisateur garde son doigt immobile en contact avec l'écran.

En pratique, pour remplacer une partie (floutée ou masquée) de l'image dégradée par une partie correspondante en clair de l'image d'origine, on peut utiliser par exemple une technique de calques numériques.

Les **figures 4a et 4b** représente le terminal de la figure 3 sur l'écran duquel deux parties distinctes de l'image floutée sont affichées en clair suite à deux interactions successives de l'utilisateur avec l'écran du terminal.

Sur la figure 4a, la partie 1 (41) de l'image d'origine est affichée en clair suite à un contact du doigt de l'utilisateur en haut de l'écran. Sur la figure 4b, suite à un glissement du doigt de l'utilisateur légèrement vers le bas, la partie 2 (42) de l'image d'origine est affichée en clair, tandis que la partie 1 (41) de l'image est redevenue floue dès qu'un mouvement du doigt de l'utilisateur a été détecté. Dans cet exemple, en faisant glisser son doigt du haut vers le bas de l'écran (ou de bas en haut), l'utilisateur pourra voir successivement le contenu de toutes les parties de l'image d'origine mais ne pourra pas voir l'image globale en clair et donc copier l'image d'origine, par exemple en déclenchant sur son terminal une capture d'écran.

Dans le mode de réalisation exposé ci-dessus, le procédé de partage d'images selon l'invention est appliqué à des images telles que des photographies numériques, cependant selon d'autres modes de réalisation, l'invention peut aussi s'appliquer à des séquences vidéos partagées, sous réserve d'utiliser une technique spécifique de codage (floutage ou brouillage) de la vidéo pour masquer son contenu, et d'utiliser un type d'interaction particulier de l'utilisateur avec l'écran du terminal déclenchant l'affichage en clair de la vidéo, sur une surface de l'écran correspondant à cette interaction.

## Revendications

1. **Procédé** de partage d'une image numérique entre un premier terminal d'utilisateur et au moins un second terminal d'utilisateur sur un réseau de communication, comprenant une étape d'affichage (S209) dans le second terminal d'une seconde image dite "image dégradée" obtenue (S203) à partir de ladite image numérique dite "première image" par un traitement numérique de la première image visant à dissimuler visuellement son contenu ;
ledit procédé étant **caractérisé en ce qu'**il comprend, suite à la détection (S211) d'une interaction d'un utilisateur avec l'écran du second terminal, des étapes de :
- détermination (S213) d'une zone de l'image dégradée, dite "zone d'interaction", en fonction de la localisation de l'interaction sur l'écran ;
- obtention (S215) d'une partie de la première image correspondant à ladite zone d'interaction déterminée;
- affichage (S219) sur l'écran du second terminal de ladite partie de la première image à la place de la surface correspondante de l'image dégradée, pendant la durée de l'interaction de l'utilisateur avec l'écran.

2. Procédé selon la revendication 1, comprenant des étapes de :
- partitionnement selon un motif prédéterminé de ladite première image en un ensemble de parties d'image, ledit motif définissant le mode de partitionnement de ladite première image et indiquant l'emplacement de chacune des parties dans ladite première image
- enregistrement de l'ensemble desdites parties avec ledit motif de partitionnement.

3. Procédé selon l'une des revendications 1 ou 2, comprenant une étape initiale de transmission par ledit premier terminal d'une requête de transfert d'image à destination d'un serveur de traitement d'images sur le réseau, ladite requête de transfert d'image comprenant ladite première image et un identifiant dudit second terminal.

4. Procédé selon la revendication 3, comprenant, avant l'étape d'affichage dans ledit second terminal de ladite image dégradée, une étape de réception dans le second terminal en provenance du serveur de traitement d'images, de ladite image dégradée ainsi que du motif de partitionnement de ladite première image.

5. Procédé selon la revendication 4, comprenant des étapes de :
- suite à la détection d'une interaction de l'utilisateur avec l'écran, détermination de ladite localisation de l'interaction sur l'écran et détermination en conséquence de ladite zone d'interaction de l'image dégradée ;
- comparaison, en utilisant le motif de partitionnement, de ladite zone d'interaction avec l'emplacement de chacune des parties dans ladite première image, et identification d'une desdites parties de la première image correspondant à ladite zone d'interaction.

6. Procédé selon la revendication 5, comprenant, suite à ladite étape de comparaison, des étapes de :
- envoi par ledit second terminal d'une requête d'obtention de l'une desdites parties identifiée de ladite première image, à destination du serveur de traitement d'images ;
- suite à la réception par le second terminal de l'une desdites parties identifiée de ladite première image, remplacement de la surface correspondante de l'image dégradée par ladite partie identifiée reçue de ladite première image.

7. Procédé selon la revendication 5, comprenant en outre, avant l'étape d'affichage dans le second terminal de ladite image dégradée :
- réception dans ledit second terminal, en provenance du serveur de traitement d'images, de l'ensemble des parties de ladite première image ;
- l'enregistrement dans une mémoire du second terminal de l'ensemble des parties de ladite première image ;
ledit second terminal mettant en œuvre l'étape d'obtention de la partie de ladite première image correspondant à ladite zone d'interaction déterminée.

8. Procédé selon la revendication 1, comprenant les étapes suivantes, effectuées dans ledit premier terminal :
- partitionnement selon un motif prédéterminé de ladite première image en un ensemble de parties d'image, ledit motif définissant le mode de partitionnement de ladite première image et indiquant l'emplacement de chacune des parties dans ladite première image
- enregistrement de l'ensemble desdites parties avec ledit motif de partitionnement ;
- transmission au second terminal de l'image dégradée, du motif de partitionnement de ladite première image, et de l'ensemble des parties de ladite première image.

9. Procédé selon la revendication 8, dans lequel ledit second terminal met en œuvre des étapes de :
- détermination de la localisation d'une interaction sur l'écran et détermination en conséquence de la zone d'interaction;
- comparaison, en utilisant le motif de partitionnement, de ladite zone d'interaction avec l'emplacement de chacune des parties dans ladite première image, et identification d'une desdites parties de ladite première image correspondant à ladite zone d'interaction ;
- remplacement de la surface correspondante de l'image dégradée par la partie identifiée de ladite première image.

10. Procédé selon l'une des revendications 1 à 9, dans lequel l'écran du second terminal est un écran tactile, l'utilisateur interagissant digitalement avec l'écran, l'affichage sur l'écran de ladite partie de la première image à la place de la surface correspondante de l'image dégradée, n'ayant lieu que pendant la durée de l'interaction digitale de l'utilisateur sur la zone d'interaction de l'image dégradée.

11. Procédé selon l'une des revendications 1 à 9, dans lequel le second terminal est équipé d'un dispositif de pointage, l'utilisateur interagissant avec l'écran au moyen du dispositif de pointage, l'affichage sur l'écran de ladite partie de la première image à la place de la surface correspondante de l'image dégradée, n'ayant lieu que pendant le maintien du pointage par l'utilisateur, via ledit dispositif de pointage, sur ladite zone d'interaction de l'image dégradée.

12. Procédé selon l'une quelconque des revendications 1 à 11, dans lequel ledit traitement numérique de ladite première image est un traitement de floutage.

13. **Terminal** de communication comprenant des moyens logiciels et/ou matériels configurés pour :
- recevoir une image dite "image dégradée" obtenue à partir d'une image numérique dite "première image" par un traitement numérique de la première image visant à dissimuler visuellement son contenu ;
- afficher ladite image dégradée sur un écran du terminal ;
- suite à la détection d'une interaction d'un utilisateur avec l'écran du terminal :
- déterminer une zone de l'image dégradée, dite "zone d'interaction", en fonction de la localisation de l'interaction sur l'écran ;
- obtenir une partie de la première image correspondant à ladite zone d'interaction déterminée;
- afficher sur l'écran du terminal ladite partie de la première image à la place de la surface correspondante de l'image dégradée, pendant la durée de l'interaction de l'utilisateur avec l'écran.

14. Terminal selon la revendication 13, comprenant des moyens configurés pour recevoir, en provenance d'un serveur de traitement d'images, ladite image dégradée ainsi qu'un motif de partitionnement de ladite première image, ledit motif définissant le mode de partitionnement de l'image et indiquant l'emplacement de chacune des parties dans ladite première image.

15. Terminal selon la revendication 14, comprenant des moyens configurés pour :
- suite à la détection d'une interaction de l'utilisateur avec l'écran, déterminer la localisation de l'interaction sur l'écran et déterminer en conséquence ladite zone d'interaction de l'image dégradée ;
- comparer, en utilisant le motif de partitionnement, la zone d'interaction avec l'emplacement de chacune des parties dans ladite première image, et identifier une desdites parties de la première image correspondant à la zone d'interaction.

16. Terminal selon la revendication 15, comprenant des moyens configurés pour :
- envoyer une requête d'obtention de la partie identifiée de ladite première image, à destination du serveur de traitement d'images ;
- suite à la réception par le terminal de la partie identifiée de ladite première image, remplacer la surface correspondante de l'image dégradée par la partie reçue de ladite première image.

17. **Programme** d'ordinateur mis en œuvre dans un terminal dans un réseau de communication, ledit programme comprenant des instructions dont l'exécution par un processeur du terminal, provoque l'exécution de tout ou partie des étapes d'un procédé selon l'une quelconque des revendications 1 à 12.

## Patentansprüche

1. Verfahren zur gemeinsamen Nutzung eines digitalen Bildes durch ein erstes Benutzerendgerät und mindestens ein zweites Benutzerendgerät über ein Kommunikationsnetz, welches einen Schritt der Anzeige (S209), auf dem zweiten Endgerät, eines zweiten Bildes, "degradiertes Bild" genannt, umfasst, das aus dem digitalen Bild, "erstes Bild" genannt, durch eine digitale Bearbeitung des ersten Bildes gewonnen wird (S203), die darauf abzielt, seinen Inhalt visuell zu verbergen;
wobei das Verfahren **dadurch gekennzeichnet ist, dass** es im Anschluss an die Erkennung (S211) einer Interaktion eines Benutzers mit dem Bildschirm des zweiten Endgerätes Schritte umfasst:
- der Bestimmung (S213) eines Bereichs des degradierten Bildes, "Interaktionsbereich" genannt, in Abhängigkeit vom Ort der Interaktion auf dem Bildschirm;
- der Gewinnung (S215) eines Teils des ersten Bildes, der dem bestimmten Interaktionsbereich entspricht;
- der Anzeige (S219), auf dem Bildschirm des zweiten Endgerätes, des Teils des ersten Bildes anstelle der dem degradierten Bild entsprechenden Fläche während der Dauer der Interaktion des Benutzers mit dem Bildschirm.

2. Verfahren nach Anspruch 1, welches Schritte umfasst:
- der Aufteilung, gemäß einem vorbestimmten Muster, des ersten Bildes in eine Gesamtheit von Bildteilen, wobei das Muster die Art und Weise der Aufteilung des ersten Bildes definiert und die Lage jedes der Teile in dem ersten Bild angibt;
- der Speicherung der Gesamtheit der Teile mit dem Aufteilungsmuster.

3. Verfahren nach einem der Ansprüche 1 oder 2, welches einen anfänglichen Schritt der Übertragung, durch das erste Endgerät, einer Bildübertragungsanforderung an einen Bildbearbeitungsserver über das Netz umfasst, wobei die Bildübertragungsanforderung das erste Bild und eine Kennung des zweiten Endgerätes umfasst.

4. Verfahren nach Anspruch 3, welches vor dem Schritt der Anzeige des degradierten Bildes auf dem zweiten Endgerät einen Schritt des Empfangs, auf dem zweiten Endgerät von dem Bildbearbeitungsserver, des degradierten Bildes sowie des Musters der Aufteilung des ersten Bildes umfasst.

5. Verfahren nach Anspruch 4, welches Schritte umfasst:
- im Anschluss an die Erkennung einer Interaktion des Benutzers mit dem Bildschirm, der Bestimmung des Ortes der Interaktion auf dem Bildschirm und dementsprechend der Bestimmung des Interaktionsbereichs des degradierten Bildes;
- des Vergleichs, unter Verwendung des Aufteilungsmusters, des Interaktionsbereichs mit der Lage jedes der Teile in dem ersten Bild und der Identifizierung eines der Teile des ersten Bildes, der dem Interaktionsbereich entspricht.

6. Verfahren nach Anspruch 5, welches im Anschluss an den Schritt des Vergleichs Schritte umfasst:
- des Sendens, durch das zweite Endgerät, einer Anforderung zur Erlangung des identifizierten einen der Teile des ersten Bildes an den Bildbearbeitungsserver;
- im Anschluss an den Empfang, durch das zweite Endgerät, des identifizierten einen der Teile des ersten Bildes, des Ersetzens der entsprechenden Fläche des degradierten Bildes durch den empfangenen identifizierten Teil des ersten Bildes.

7. Verfahren nach Anspruch 5, welches außerdem, vor dem Schritt der Anzeige des degradierten Bildes auf dem zweiten Endgerät, umfasst:
- Empfang, auf dem zweiten Endgerät von dem Bildbearbeitungsserver, der Gesamtheit der Teile des ersten Bildes;
- die Speicherung der Gesamtheit der Teile des ersten Bildes in einem Speicher des zweiten Endgerätes;
wobei das zweite Endgerät den Schritt der Erlangung des Teils des ersten Bildes, der dem bestimmten Interaktionsbereich entspricht, durchführt.

8. Verfahren nach Anspruch 1, welches die folgenden Schritte umfasst, die im ersten Endgerät ausgeführt werden:
- Aufteilung, gemäß einem vorbestimmten Muster, des ersten Bildes in eine Gesamtheit von Bildteilen, wobei das Muster die Art und Weise der Aufteilung des ersten Bildes definiert und die Lage jedes der Teile in dem ersten Bild angibt;
- Speicherung der Gesamtheit der Teile mit dem Aufteilungsmuster;
- Übertragung des degradierten Bildes, des Musters der Aufteilung des ersten Bildes und der Gesamtheit der Teile des ersten Bildes an das zweite Endgerät.

9. Verfahren nach Anspruch 8, wobei das zweite Endgerät Schritte durchführt:
- der Bestimmung des Ortes einer Interaktion auf dem Bildschirm und dementsprechend der Bestimmung des Interaktionsbereichs;
- des Vergleichs, unter Verwendung des Aufteilungsmusters, des Interaktionsbereichs mit der Lage jedes der Teile in dem ersten Bild und der Identifizierung eines der Teile des ersten Bildes, der dem Interaktionsbereich entspricht;
- des Ersetzens der entsprechenden Fläche des degradierten Bildes durch den identifizierten Teil des ersten Bildes.

10. Verfahren nach einem der Ansprüche 1 bis 9, wobei der Bildschirm des zweiten Endgerätes ein Berührungsbildschirm ist, wobei der Benutzer digital mit dem Bildschirm interagiert, wobei die Anzeige des Teils des ersten Bildes anstelle der entsprechenden Fläche des degradierten Bildes auf dem Bildschirm nur während der Dauer der digitalen Interaktion des Benutzers auf dem Interaktionsbereich des degradierten Bildes erfolgt.

11. Verfahren nach einem der Ansprüche 1 bis 9, wobei das zweite Endgerät mit einer Zeigevorrichtung ausgestattet ist, wobei der Benutzer mit dem Bildschirm mittels der Zeigevorrichtung interagiert, wobei die Anzeige des Teils des ersten Bildes anstelle der entsprechenden Fläche des degradierten Bildes auf dem Bildschirm nur während der Aufrechterhaltung des Zeigens durch den Benutzer, über die Zeigevorrichtung, auf den Interaktionsbereich des degradierten Bildes erfolgt.

12. Verfahren nach einem der Ansprüche 1 bis 11, wobei die digitale Bearbeitung des ersten Bildes eine Bearbeitung zur Unkenntlichmachung ist.

13. Kommunikationsendgerät, welches Software- und/oder Hardwaremittel umfasst, die ausgelegt sind zum:
- Empfangen eines Bildes, "degradiertes Bild" genannt, das aus einem digitalen Bild, "erstes Bild" genannt, durch eine digitale Bearbeitung des ersten Bildes gewonnen wurde, die darauf abzielt, seinen Inhalt visuell zu verbergen;
- Anzeigen des degradierten Bildes auf einem Bildschirm des Endgerätes;
- im Anschluss an die Erkennung einer Interaktion eines Benutzers mit dem Bildschirm des Endgerätes:
- Bestimmen eines Bereichs des degradierten Bildes, "Interaktionsbereich" genannt, in Abhängigkeit vom Ort der Interaktion auf dem Bildschirm;
- Gewinnen eines Teils des ersten Bildes, der dem bestimmten Interaktionsbereich entspricht;
- Anzeigen, auf dem Bildschirm des Endgerätes, des Teils des ersten Bildes anstelle der dem degradierten Bild entsprechenden Fläche während der Dauer der Interaktion des Benutzers mit dem Bildschirm.

14. Endgerät nach Anspruch 13, welches Mittel umfasst, die dafür ausgelegt sind, von einem Bildbearbeitungsserver das degradierte Bild sowie ein Muster der Aufteilung des ersten Bildes zu empfangen, wobei das Muster die Art und Weise der Aufteilung des Bildes definiert und die Lage jedes der Teile in dem ersten Bild angibt.

15. Endgerät nach Anspruch 14, welches Mittel umfasst, die ausgelegt sind zum:
- im Anschluss an die Erkennung einer Interaktion des Benutzers mit dem Bildschirm, Bestimmen des Ortes der Interaktion auf dem Bildschirm und dementsprechend Bestimmen des Interaktionsbereichs des degradierten Bildes;
- Vergleichen, unter Verwendung des Aufteilungsmusters, des Interaktionsbereichs mit der Lage jedes der Teile in dem ersten Bild und Identifizieren eines der Teile des ersten Bildes, der dem Interaktionsbereich entspricht.

16. Endgerät nach Anspruch 15, welches Mittel umfasst, die ausgelegt sind zum:
- Senden einer Anforderung zur Erlangung des identifizierten Teils des ersten Bildes an den Bildbearbeitungsserver;
- im Anschluss an den Empfang, durch das Endgerät, des identifizierten Teils des ersten Bildes, Ersetzen der entsprechenden Fläche des degradierten Bildes durch den empfangenen Teil des ersten Bildes.

17. Computerprogramm, welches in einem Endgerät in einem Kommunikationsnetz ausgeführt wird, wobei das Programm Anweisungen umfasst, deren Ausführung durch einen Prozessor des Endgerätes die Ausführung aller Schritte oder eines Teils der Schritte eines Verfahrens nach einem der Ansprüche 1 bis 12 bewirkt.

## Claims

1. **Method** for sharing a digital image between a first user terminal and at least one second user terminal over a communication network, comprising a step of display (S209) in the second terminal of a second image termed "degraded image" obtained (S203) on the basis of said digital image termed "first image" by a digital processing of the first image aimed at visually concealing its content;
said method being **characterized in that** it comprises, subsequent to the detection (S211) of an interaction of a user with the screen of the second terminal, steps of:
- determination (S213) of a zone of the degraded image, termed "interaction zone", as a function of the location of the interaction on the screen;
- obtaining (S215) of a part of the first image corresponding to said determined zone;
- display (S219) on the screen of the second terminal of said part of the first image in place of the corresponding area of the degraded image, for the duration of the user's interaction with the screen.

2. Method according to Claim 1, comprising steps of:
- partitioning according to a predetermined template of said first image into a set of image parts, said template defining the mode of partitioning of said first image and indicating the site of each of the parts in said first image;
- recording of the set of said parts with said partitioning template.

3. Method according to either of Claims 1 and 2, comprising an initial step of transmission by said first terminal of an image transfer request destined for an image processing server on the network, said image transfer request comprising said first image and an identifier of said second terminal.

4. Method according to Claim 3, comprising, before the step of display in the second terminal of said degraded image, a step of reception in the second terminal originating from the image processing server, of said degraded image as well as of the partitioning template of said first image.

5. Method according to Claim 4, comprising steps of:
- subsequent to the detection of an interaction of the user with the screen, determination of said location of the interaction on the screen and consequently determination of said zone of interaction of the degraded image;
- comparison, using the partitioning template, of said interaction zone with the site of each of the parts in said first image, and identification of one of said parts of the first image corresponding to said interaction zone.

6. Method according to Claim 5, comprising, subsequent to said comparison step, steps of:
- dispatching by said second terminal of a request for obtaining one of said identified parts of said first image, destined for the image processing server;
- subsequent to the reception by the second terminal of one of said identified parts of said first image, replacement of the corresponding area of the degraded image with said received identified part of said first image.

7. Method according to Claim 5, furthermore comprising, before the step of display in the second terminal of said degraded image:
- reception in said second terminal, originating from the image processing server, of the set of the parts of said first image;
- the recording in a memory of the second terminal of the set of the parts of said first image;
said second terminal implementing the step of obtaining the part of said first image corresponding to said determined zone.

8. Method according to Claim 1, comprising the following steps, performed in said first terminal:
- partitioning according to a predetermined template of said first image into a set of image parts, said template defining the mode of partitioning of said first image and indicating the site of each of the parts in said first image;
- recording of the set of said parts with said partitioning template;
- transmission to the second terminal of the degraded image, of the partitioning template of said first image, and of the set of the parts of said first image.

9. Method according to Claim 8, in which said second terminal implements steps of:
- determination of the location of an interaction on the screen and consequently determination of the zone of interaction;
- comparison, using the partitioning template, of said interaction zone with the site of each of the parts in said first image, and identification of one of said parts of said first image corresponding to said interaction zone;
- replacement of the corresponding area of the degraded image with the identified part of the first image.

10. Method according to one of Claims 1 to 9, in which the screen of the second terminal is a touchscreen, the user interacting digitally with the screen, the display on the screen of said part of the first image in place of the corresponding area of the degraded image, occurring only for the duration of the user's digital interaction on the zone of interaction of the degraded image.

11. Method according to one of Claims 1 to 9, in which the second terminal is equipped with a pointing device, the user interacting with the screen by means of the pointing device, the display on the screen of said part of the first image in place of the corresponding area of the degraded image, occurring only while the user maintains the pointing, via said pointing device, on said zone of interaction of the degraded image.

12. Method according to any one of Claims 1 to 11, in which said digital processing of said first image is a blurring processing.

13. Communication **terminal** comprising software means and/or hardware means configured to:
- receive an image termed "degraded image" obtained on the basis of a digital image termed "first image" by a digital processing of the first image aimed at visually concealing its content;
- display said degraded image on a screen of the terminal;
- subsequent to the detection of an interaction of a user with the screen of the terminal:
- determine a zone of the degraded image, termed "interaction zone", as a function of the location of the interaction on the screen;
- obtain a part of the first image corresponding to said determined zone;
- display on the screen of the terminal said part of the first image in place of the corresponding area of the degraded image, for the duration of the user's interaction with the screen.

14. Terminal according to Claim 13, comprising means configured to receive, originating from an image processing server, said degraded image as well as a partitioning template of said first image, said template defining the mode of partitioning of the image and indicating the site of each of the parts in said first image.

15. Terminal according to Claim 14, comprising means configured to:
- subsequent to the detection of an interaction of the user with the screen, determine the location of the interaction on the screen and consequently determine said zone of interaction of the degraded image;
- compare, using the partitioning template, the interaction zone with the site of each of the parts in said first image, and identify one of said parts of the first image corresponding to the interaction zone.

16. Terminal according to Claim 15, comprising means configured to:
- dispatch a request for obtaining the identified part of said first image, destined for the image processing server;
- subsequent to the reception by the terminal of the identified part of said first image, replace the corresponding area of the degraded image with the received part of said first image.

17. Computer **program** implemented in a terminal in a communication network, said program comprising instructions whose execution by a processor of the terminal brings about the execution of all or some of the steps of a method according to any one of Claims 1 to 12.
